# EUROPÄISCHE PATENTSCHRIFT

(11) **EP 0 421 017 B1**
(45) Veröffentlichungstag und Bekanntmachung des Hinweises auf die Patenterteilung: **20.07.1994**
(21) Anmeldenummer: 89118611.6
(22) Anmeldetag: 06.10.1989
(51) Int. Cl.: H04N 5/45

(54) **Schaltungsanordnung zur Bild-in-Bild-Einblendung in einem Fernsehgerät mit nur einem Tuner**
Circuit arrangement for picture-in-picture insertion in a television set with only one tuner
Dispositif d'insertion d'image dans l'image pour un récepteur de télévision avec un seul tuner

(43) Veröffentlichungstag der Anmeldung: 10.04.1991
(73) Patentinhaber: SIEMENS AKTIENGESELLSCHAFT, 80333 München (DE); Dangschat, Rainer, Dipl.-Ing. (FH), D-85652 Pliening (DE)
(72) Erfinder: Dangschat, Rainer, Dipl.-Ing. (FH), D-85652 Pliening (DE)

(56) Entgegenhaltungen:
- EP-A- 0 222 025
- FR-A- 2 265 235
- GB-A- 2 017 452
- PATENT ABSTRACTS OF JAPAN, Band 11, Nr. 182 (E-515)[2629], 11. Juni 1987;& JP-A-62 13 172 (SHARP CORP.) 21-01-1987
- PATENT ABSTRACTS OF JAPAN, Band 10, Nr. 137 (E-405)[2194], 21. Mai 1986;& JP-A-61 2478 (MITSUBISHI DENKI K.K.) 08-01-1986

## Beschreibung

Die Erfindung betrifft eine Schaltungsanordnung zur Bild-in-Bild-Einblendung in einem Fernsehgerät mit nur einem Tuner nach dem Oberbegriff des Anspruchs 1.

Aus der DE-A-24 13 839 ist eine derartige Schaltungsanordnung bekannt. Zur Bild-in-Bild-Einblendung wird dort der zur Bilddarstellung in einem Fernsehgerät allgemein bekannte analoge Signalweg (Tuner, ZF-Verstärker, Videoverstärker, Horizontal- und Vertikalablenkstufe sowie Bildröhre) um eine Speicher- und Umschalteinrichtung ergänzt, mit denen ein wiederzugebender Bildinhalt eines in das Großbild einzublendenden Kleinbildes gespeichert und ausgelesen werden kann. Gesteuert wird die Speicher- und Schalteinrichtung von den Ausgängen des ZF-Verstärkers sowie der Horizontalablenkstufe. Die Schalteinrichtung ihrerseits schaltet den Tuner zeilenweise zwischen zwei Abstimmfrequenzen derart um, daß während bestimmter Zeilen des Großbildes ein anderes Programm, das als Kleinbild dargestellt werden soll, empfangen wird. Gleichzeitig wird der Videoverstärker mit der Speichereinrichtung verbunden, wodurch die Zeilen des empfangenen anderen Programmes einzeln und nacheinander in die Speichereinrichtung, die im allgemeinen als CCD-Speicher ausgebildet ist, eingeschrieben werden.

Die Speichereinrichtung gibt die in sie eingeschriebene Information an den Videoverstärker dann wieder ab, wenn der den Bildschirm überschreibenden Elektronenstrahl in den Bereich des Bildausschnittes für das Kleinbild gelangt.

Der Einsatz einer derartigen Schaltungsanordnung zur Bild-in-Bild-Einblendung ist jedoch insbesondere hinsichtlich des zeilenweisen Umschaltens des Tuners und der damit verbundenen hohen Umschaltgeschwindigkeit zumindest problematisch. Eine für den Betrachter des Bildschirmes zufriedenstellende Bildqualität läßt sich mit der bekannten Schaltungsanordnung nicht erreichen.

Andere Möglichkeiten zur Bild-in-Bild-Einblendung in einem Fernsehgerät sind z. B. in DE-A-28 08 188 und US-A 4 249 213 vorgeschlagen worden. Dort werden für den Empfang zweier Fernsehprogramme zwei getrennte Signalwege vorgesehen, die jeweils mindestens einen Tuner mit nachgeschaltetem ZF-Verstärker aufweisen. Eine solche Lösung ist zwar hinsichtlich der Bild-in-Bild-Einblendung als optimal zu betrachten, jedoch wegen des hohen technischen Aufwandes, der durch die beiden getrennten Signalwege bedingt ist, nur bei Fernsehgeräten der gehobenen Preisklasse zu realisieren.

Der Erfindung lag die Aufgabe zugrunde, eine Schaltungsanordnung zur Bild-in-Bild-Einblendung in einem Fernsehgerät mit nur einem Tuner anzugeben, mit dem in einfacher Weise die Bild-in-Bild-Einblendung realisierbar ist.

Diese Aufgabe wird durch die Merkmale des Anspruchs 1 gelöst.

Weiterbildungen der Erfindung sind Gegenstand der Unteransprüche.

Die erfindungsgemäße Lösung beruht also im wesentlichen darauf, daß sowohl das Bildsignal für das Kleinbild als auch das Großbild in verschiedene Speichereinrichtungen eingeschrieben und gemeinsam taktrichtig zur Bild-in-Bild-Einblendung wieder ausgelesen werden. Versorgt werden beide Speichereinrichtungen aus einem gemeinsamen Signalweg mit nur einem Tuner, der zwischen zwei Abstimmfrequenzen eines ersten und zweiten Programmes umgeschaltet wird und dem eine Umschalteinrichtung nachgeschaltet ist. Ist der Tuner auf die Abstimmfrequenz für das Programm zur Darstellung des Großbildes eingestellt, so wird über die Umschalteinrichtung der Großbildsignalweg mit Bildsignalen versorgt. Wenn dagegen der Tuner auf die zweite Abstimmfrequenz zur Darstellung des zweiten Programmes als Kleinbild eingestellt ist, so gelangen die Bildsignale über die Umschalteinrichtung zum Kleinbildsignalweg. Das Umschalten des Tuners sowie der Umschalteinrichtung übernimmt dabei eine Steuereinrichtung.

Die Taktzeiten der Umschalteinrichtung sind so gewählt, daß während der überwiegenden Zeit der Großbildsignalweg mit Bildsignalen des ersten Programmes versorgt und nur während relativ kurzer Zeitintervalle auf den Kleinbildsignalweg umgeschaltet wird. Während der Umschaltpausen wird das Großbild aus der eigenen Großbildspeichereinrichtung weiterversorgt, d. h., daß z. B. das Großbild durch wiederholtes Auslesen des gerade zuletzt gespeicherten Halbbildes aus der Großbildspeichereinrichtung gebildet wird. Diese Zeitspanne muß nur ausreichen, um den Tuner auf die zweite Abstimmfrequenz umzuschalten, um die in der Kleinbildspeichereinrichtung gespeicherten Bildsignale mit neuen Bildsignalen zu überschreiben und um den Tuner wieder auf die erste Abstimmfrequenz zurückzuschalten. Als Resultat erhält man ein Großbild, das kleinere, aber noch nicht störende Unterbrechungen im Bewegungsablauf aufweist. Derartige Unterbrechnungen sind heute beim Umcodieren von 50 auf 60 Hz üblich und werden vom Betrachter toleriert.

Das Kleinbild hat dagegen eine stark reduzierte Bewegungsauflösung. Es besteht aus Standbildern, die z. B. mit einer Frequenz von 5 bis 20 Hz weitergeschaltet werden.

Die Erfindung wird im folgenden anhand einer Figur eingehend erläutert, wobei aus Gründen der besseren Übersichtlichkeit auf die Darstellung der bei Fernsehgeräten notwendigen Ablenkeinrichtung verzichtet wurde. Die FIG zeigt das Prinzipschaltbild einer Schaltungsanordnung zur Bild-in-Bild-Einblendung in einem Fernsehgerät mit nur einem einzigen Tuner 1, der in an sich bekannter Weise eingangsseitig mit einer Empfangsantenne 13 und ausgangsseitig mit einem ZF-Verstärker 2 sowie nachgeschaltetem Farbdekoder 3 verbunden ist. Im folgenden wird beispielhaft davon ausgegangen, daß am Ausgang des Farbdekoders 3 das Bildsignal in Form von Luminanz- Y und Chrominanzsignalen U, V abgreifbar ist. Selbstverständlich kann das Bildsignal z. B. auch als FBAS-Signal vorliegen.

Der Tuner 1 ist erfindungsgemäß über ein Steuersignal, z. B. durch Anlegen zweier unterschiedlichen Abstimmspannungen, die z. B. in der noch zu erläuternden Steuereinrichtung 9 abgespeichert sind, zwischen zwei Empfangsfrequenzen so umschaltbar, daß am Ausgang des Farbdekoders 3 entweder erste Bildsignale Y1, U1, V1 eines ersten Programmes oder zweite Bildsignale Y2, U2, V2 eines zweiten Programmes sowie die dazugehörenden Synchronsignale SYNC 1, 2 abgreifbar sind.

Der Ausgang des Farbdekoders 3 ist erfindungsgemäß mit dem Eingang einer Umschalteinrichtung 4, zweckmäßigerweise einem Videomultiplexer, verbunden, der - je nach dem, auf welche der beiden Empfangsfrequenzen der Tuner 1 gerade geschaltet ist - das erste Bildsignal Y1, U1, V1 auf einen Großbildsignalweg 10 und das zweite Bildsignal Y2, U2, V2 auf einen Kleinbildsignalweg 20 schaltet. Gesteuert wird dabei das umschalten des Tuners 1 sowie der Umschalteinrichtung 4 von der bereits erwähnten Steuereinrichtung 9, die zu diesem Zweck mit der Umschalteinrichtung 4 und dem Tuner 1 über Steuerleitungen 14, 15 in Verbindung steht.

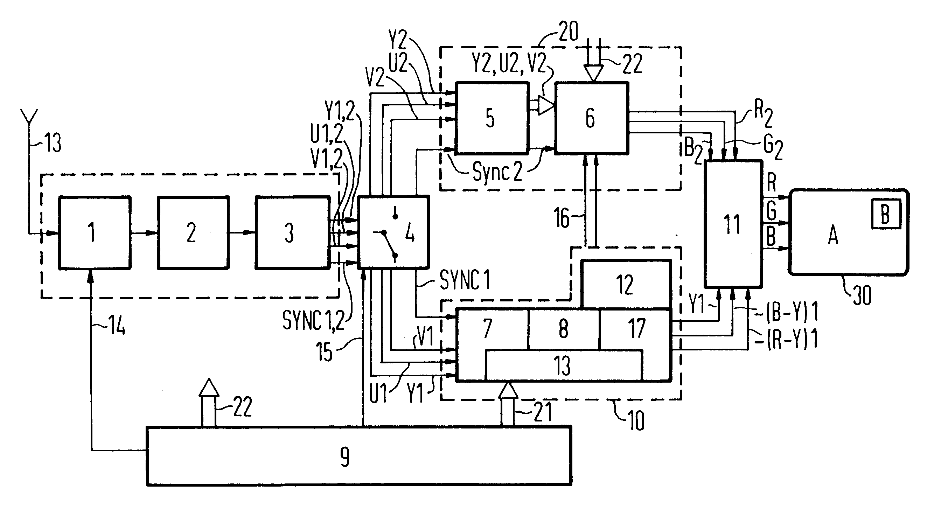

Ist der Tuner 1 auf die erste Empfangsfrequenz zum Empfang von Bildsignalen Y1, U1, V1 des ersten Programmes geschaltet und nimmt dementsprechend die Umschalteinrichtung 4, die in FIG 1 dargestellte Schalterstellung ein, so gelangen die Bildsignale Y1, U1, V1 zum Großbildsignalweg 10, dessen zentraler Bestandteil eine Großbildspeichereinrichtung 8, insbesondere ein Halbbildspeicher in Form von dynamischen RAMs, ist. Neben dieser Großbildspeichereinrichtung 8 sind weiterhin im Großbildsignalweg 10 ein Eingangsinterface 7, ein Ausgangsinterface 17 sowie eine Speichersynchronisierstufe 13 vorgesehen, die im wesentlichen der A/D und D/A-Wandlung der Bildsignale Y1, U1, V1 dienen.

Der Aufbau und die Wirkungsweise dieses Großbildsignalweges 10 ist für sich genommen bereits bekannt und beispielsweise ausführlich in Siemens Components 26, 1988, Heft 6, Seite 240 bis 245 beschrieben, so daß hier nicht näher darauf eingegangen werden muß.

In dem vorgestellten Ausführungsbeispiel stehen am Ausgang des digitalen Großbildsignalweges 10 die Bildsignale für das auf der Bildröhre 30 darzustellende Großbild A in Form von Lumi nanz-Y1 und Farbdifferenzsignalen -(B - Y)1, -(R - Y)1 zur Verfügung.

Ist dagegen der Tuner 1 auf die zweite Empfangsfrequenz umgeschaltet und liegen am Eingang der Umschalteinrichtung 4 folglich die zweiten Bildsignale Y2, U2, V2 an, so schaltet die Steuereinrichtung 9 diese auf den Kleinbildsignalweg 20, der im wesentlichen eine Kleinbildspeichereinrichtung 6, insbesondere einen Halbbildspeicher, enthält. Weiterhin verfügt der Kleinbildsignalweg 20 über eine zwischen die Kleinbildspeichereinrichtung 6 und die Umschalteinrichtung 4 geschaltete A/D-Umsetzerstufe 5, durch die die zum Kleinbild gehörenden analogen Bildsignale Y1, U1, V1 digitalisiert und als Bilddaten in die Kleinbildspeichereinrichtung 6 einlesbar sind. Am Ausgang der Kleinbildspeichereinrichtung 6 ist eine D/A-Umsetzerstufe vorgesehen, über den beispielsweise die gespeicherten Bildsignale in analoge RGB- oder YUV-Signale gewandelt werden. Der Kleinbildsignalweg 20 ist darüber hinaus derart ausgebildet, daß das zweite Programm als verkleinertes Bild darstellbar ist. Dazu ist beispielsweise eine Dezimierung der zweiten Bildsignale Y2, U2, V2 vorgesehen. Eine mögliche Ausgestaltung des Kleinbildsignalwegs 20 sieht beispielsweise die Verwendung der integrierten Bausteine von Siemens SDA 9087 als dreifach D/A-Umsetzerstufe sowie des SDA 9088 als Bild-in-Bild-Prozessor vor, wobei der letztere sowohl die Kleinbildspeichereinrichtung 6 als auch die D/A-Umsetzung enthält.

Weiterhin weist die erfindungsgemäße Schaltungsanordnung Mittel auf, durch die das im Kleinbildsignalweg 20 gespeicherte Kleinbild B auslesbar und zum Großbild A auf der Bildröhre 30 des Fernsehgerätes einblendbar ist. Die am Ausgang des Kleinbildsignalweges 20 abgreifbaren Bildsignale, hier beispielhaft R2, G2 und B2 sowie die im Großbildsignalweg ausgangsseitig anliegenden Bildsignale Y1, -(B - Y)1, -(R - Y)1 gelangen dazu beispielhaft an einen RGB-Prozessor 11, z. B. den integrierten Baustein TDA 4580 (Philips), über den das Einblenden des Kleinbildes B in das Großbild A möglich ist. Dazu werden der Bildröhre 30 die gemischten Bildsignale in RGB-Form zugeführt. Die Synchronisierung zwischen Großbildsignalweg 10 und Kleinbildsignalweg 20 erfolgt über Synchronisierungssignale auf Steuerleitungen 16, die zwischen den Großbildsignalweg 10 und den Kleinbildsignalweg 20 geschaltet sind. Dazu können die Steuerleitungen 16 beliebige H- und V-Impulse zur Synchronisierung des Kleinbildes B auf das Großbild A führen.

Über Verbindungsleitungen 21 und 22, z. B. einen I²C-Bus, kann die bereits erwähnte Steuereinrichtung 9 sowohl die Großbildspeichereinrichtung 8 als auch die Kleinbildspeichereinrichtung 6 aktivieren. Zusätzlich sorgt die Steuereinrichtung 9 für das zeitrichtige Umschalten der Umschalteinrichtung 4 sowie des Tuners 1, und zwar derart, daß ein in der Kleinbildspeichereinrichtung 6 gespeichertes Kleinbild B mindestens teilweise von neuen zweiten Bildsignalen Y2, U2, V2 zur Darstellung eines neuen Kleinbildes A überschrieben wird. Zweckmäßigerweise wird in die Kleinbildspeichereinrichtung 6 ein neues Halbbild eingeschrieben. Während dieser Zeitspannen wird das Großbild A durch wiederholtes Auslesen des gerade zuletzt gespeicherten Großbildes aus der Großbildspeichereinrichtung 8 weiterversorgt.

Die Zeitspanne, in der die Umschalteinrichtung 4 auf den Kleinbildsignalweg 20 geschaltet ist, ist gerade so lange gewählt, daß der Tuner 1 auf die Abstimmfrequenz für das zweite Programm umspringen, ein neues Halbbild in die Kleinbildspeichereinrichtung 6 einschreiben und die Abstimmfrequenz des Tuners 1 auf das erste Programm zurückspringen kann. Die Zeitspanne beträgt maximal 100 msec.

Während der überwiegenden Zeit ist dagegen der Tuner 1 auf die erste Empfangsfrequenz und damit das erste Programm und die Umschalteinrichtung 4 auf den Großbildsignalweg 10 geschaltet. Damit ergibt sich für den Betrachter der Bildröhre 30 ein Großbild A, in das ein Kleinbild B eingeblendet ist, wobei das Kleinbild B aus aufeinanderfolgenden Standbildern besteht, die mit einer Frequenz von beispielsweise bis zu 20 Hz erneuert werden. Ergebnis ist folglich ein Großbild A, das kleinere, aber noch nicht störende Unterbrechungen im Bewegungsablauf aufweist, in das ein Kleinbild B als Standbild eingeblendet ist, dessen Bildinhalt sich mit einer Frequenz von bis zu 20 Hz erneuert.

Wenn die Umschalteinrichtung 4 auf den Kleinbildsignalweg 20 geschaltet ist, so wird selbstverständlich der zum Großbild A gehörende Ton unterbrochen. Um die dadurch entstehenden Probleme zu lösen, wird in einer Weiterbildung der Erfindung vorgeschlagen, eine digitale Tonsignalverarbeitungsschaltung 12 im Fernsehgerät vorzusehen, bei der das fehlende Tonsignal während der Tonunterbrechung überbrückt wird.

Es kann jedoch davon ausgegangen werden, daß im allgemeinen vom Fernsehzuschauer Tonunterbrechungen im Bereich von bis zu 50 msec wegen der Trägheit des menschlichen Ohres toleriert werden.

Mit der hier vorgestellten Schaltungsanordnung ist es in einfacher Weise möglich, eine Bild-in-Bild-Einblendung bei Fernsehgeräten mit nur einem Tuner vorzusehen. Als Ergebnis sieht der Fernsehzuschauer ein Großbild A, in das ein Kleinbild B mit reduzierter Bewegungsauflösung eingeblendet wird. Die Erfindung nutzt die bekanntermaßen eingeschränkte Wahrnehmungsfähigkeit des menschlichen Auges und Ohres aus und bietet demzufolge nicht mehr an, als der durchschnittliche Endverbraucher tatsächlich wahrnehmen kann.

Es wird abschließend noch darauf hingewiesen, daß es nicht zwingend ist, die Kleinbildspeichereinrichtung 6 und die Großbildspeichereinrichtung 8 seperat auszuführen. Es ist vielmehr auch möglich, die Kleinbildspeichereinrichtung als Teil der Großbildspeichereinrichtung 8 auszubilden, wie dies beim Speichern von Standbildern im großen Bewegtbild bereits möglich ist.

## Patentansprüche

1. Schaltungsanordnung zur Bild-in-Bild-Einblendung in einem Fernsehgerät mit nur einem Tuner (1), wobei der Tuner (1) in seiner Abstimmfrequenz, gesteuert von einer Steuereinrichtung (9), so umschaltbar ist, daß ein erstes Bildsignal (Y1, U1, V1) eines ersten Programmes zur Darstellung als Großbild (A) und ein zweites Bildsignal (Y2, U2, V2) eines zweiten Programmes zur Darstellung eines in das Großbild (A) einblendbaren Kleinbildes (B) verwendbar ist, und mit einer dem Tuner (1) nachgeschaltetem und von der Steuereinrichtung (9) steuerbaren Umschalteinrichtung (4), durch die abwechselnd das vom Tuner (1) gelieferte erste Bildsignal (Y1, U1, V1) einem Großbildsignalweg (10) und das zweite Bildsignal (Y2, U2, V2) kurzzeitig einem Kleinbildsignalweg (20) mit einer Kleinbildspeichereinrichtung (6) zuführbar ist und mit Mitteln (11), durch die das im Kleinbildsignalweg (20) gespeicherte Kleinbild (B) auslesbar und zum Großbild (A) auf einer Bildröhre (30) des Fernsehgerätes einblendbar ist
**dadurch gekennzeichnet,**
daß der Großbildsignalweg (10) eine Großbildspeichereinrichtung (8) aufweist, die zur Speicherung des Großbildes (A) vorgesehen und aus der das gespeicherte Großbild (A) zur Großbilddarstellung auslesbar ist,
daß während der Zeitspannen, in denen die Umschalteinrichtung (4) auf den Kleinbildsignalweg (20) geschaltet ist, das Großbild (A) durch wiederholtes Auslesen des gerade zuletzt gespeicherten Großbildes (A) aus der Großbildspeichereinrichtung (8) weiterversorgt wird und
daß diese Zeitspannen so gewählt sind, daß das in der Kleinbildspeichereinrichtung (6) gespeicherte Kleinbild (B) mindestens teilweise von neuen zweiten Bildsignalen (Y2, U2, V2) zur Darstellung eines neuen Kleinbildes (B) überschreibbar ist.

2. Schaltungsanordnung nach Anspruch 1,
**dadurch gekennzeichnet,**
daß die Großbildspeichereinrichtung (8) mindestens als Halbbildspeicher ausgebildet ist.

3. Schaltungsanordnung nach Anspruch 1 oder 2,
**dadurch gekennzeichnet,**
daß die Kleinbildspeichereinrichtung (6) mindestens als Halbbildspeicher ausgebildet ist.

4. Schaltungsanordnung nach einem der Ansprüche 1 bis 3,
**dadurch gekennzeichnet,**
daß der Umschalteinrichtung (4) Bildsignale (Y1, U1, V1; Y2, U2, V2) zuführbar sind, die einen Luminanzsignalanteil (Y1, Y2) sowie Chrominanzsignalanteile (U1, U2; V1, V2) aufweisen.

5. Schaltungsanordnung nach einem der Ansprüche 1 bis 3,
**dadurch gekennzeichnet,**
daß der Umschalteinrichtung (4) die Bildsignale als FBAS-Signale zuführbar sind.

6. Schaltungsanordnung nach einem der Ansprüche 1 bis 5,
**dadurch gekennzeichnet,**
daß durch die Steuereinrichtung (9) die Umschalteinrichtung (4) gerade so lange auf den Kleinbildsignalweg (20) umschaltbar ist, daß der Tuner (1) auf die Abstimmfrequenz für das zweite Programm umspringen, ein neues Halbbild in die Kleinbildspeichereinrichtung (6) einschreiben und die Abstimmfrequenz des Tuners (1) auf das erste Programm zurückspringen kann.

7. Schaltungsanordnung nach Anspruch 6,
**dadurch gekennzeichnet,**
daß die Umschalteinrichtung (4) die Bildsignale (Y2, U2, V2) für das zweite Programm zur Kleinbilddarstellung maximal 100 msec auf den Kleinbildsignalweg (20) schaltet.

8. Schaltungsanordnung nach einem der Ansprüche 1 bis 7,
**dadurch gekennzeichnet,**
daß das Kleinbild (B) aus aufeinanderfolgenden Standbildern gebildet ist, die mit einer Frequenz von bis zu 20 Hz erneuerbar sind.

9. Schaltungsanordnung nach einem der Ansprüche 1 bis 8,
**dadurch gekennzeichnet,**
daß zur Vermeidung von Tonunterbrechungen eine digitale Tonsignalverarbeitungseinrichtung (12) vorgesehen ist, durch die die Zeitspannen, in denen die Umschalteinrichtung (4) auf den Kleinbildsignalweg (20) geschaltet ist, überbrückbar ist.

10. Schaltungsanordnung nach einem der Ansprüche 1 bis 9,
**dadurch gekennzeichnet,**
daß der Tuner (1) zum Umschalten zwischen den Abstimmfrequenzen für das erste und zweite Programm mit Abstimmspannungen beaufschlagbar ist, die in der Steuereinrichtung (9) bereits abgespeichert sind.

11. Schaltungsanordnung nach einem der Ansprüche 1 bis 10,
**dadurch gekennzeichnet,**
dar die Kleinbildspeichereinrichtung 6 als Teil der Großbildspeichereinrichtung 8 ausgebildet ist.

## Claims

1. Circuit arrangement for picture-in-picture insertion in a television set having only one tuner (1), the tuning frequency of the tuner (1) being switchable, controlled by a control device (9), in such a manner that a first picture signal (Y1, U1, V1) of a first programme can be used to be displayed as large picture (A) and a second picture signal (Y2, U2, V2) of a second programme can be used to display small picture (B) which can be inserted into the large picture (A), and having a switch-over device (4), which follows the tuner (1) and can be controlled by the control device (9), by means of which, alternately, the first picture signal (Y1, U1, V1) supplied by the tuner (1) can be supplied to a large-picture signal path (10) and the second picture signal (Y2, U2, V2) can be supplied for a short time to a small-picture signal path (20) having a small-picture memory device (6), and having means (11) by means of which the small picture (B) stored on the small-picture signal path (20) can be read out and inserted into the large picture (A) on a picture tube (30) of the television set,characterized in that the large-picture signal path (10) exhibits a large-picture memory device (8) which is provided for storing the large picture (A) and from which the stored large picture (A) can be read out for displaying the large picture, in that during the time intervals in which the switch-over device (4) is switched to the small-picture signal path (20), the large picture (A) is supplied further by repeated reading-out of the last large picture (A), just stored, from the large-picture memory device (8), and in that these time intervals are selected in such a manner that the small picture (B) stored in the small-picture memory device (6) can be at least partially overwritten by new second picture signals (Y2, U2, V2) for displaying a new small picture (B).

2. Circuit arrangement according to Claim 1, characterized in that the large-picture memory device (8) is constructed at least as a field buffer.

3. Circuit arrangement according to Claim 1 or 2, characterized in that the small-picture memory device (6) is constructed at least as a field buffer.

4. Circuit arrangement according to one of Claims 1 to 3, characterized in that the switch-over device (4) can be supplied with picture signals (Y1, U1, V1; Y2, U2, V2) which exhibit a luminance signal component (Y1, Y2) and chrominance signal components (U1, U2; V1, V2).

5. Circuit arrangement according to one of Claims 1 to 3, characterized in that the switch-over device (4) can be supplied with the picture signals as composite colour video signals.

6. Circuit arrangement according to one of Claims 1 to 5, characterized in that the switch-over device (4) can be switched over to the small-picture signal path (20) by the control device (9) for just long enough for the tuner (1) to jump to the tuning frequency for the second programme, write a new field into the small-picture memory device (6) and for the tuning frequency of the tuner (1) to jump back to the first programme.

7. Circuit arrangement according to Claim 6, characterized in that the switch-over device (4) switches the picture signals (Y2, U2, V2) for the second programme for displaying the small picture to the small-picture signal path (20) for a maximum of 100 msec.

8. Circuit arrangement according to one of Claims 1 to 7, characterized in that the small picture (B) is formed from successive still frames which can be refreshed at a rate of up to 20 Hz.

9. Circuit arrangement according to one of Claims 1 to 8, characterized in that, for avoiding sound interruptions, a digital sound signal processing device (12) is provided by means of which the time intervals in which the switch-over device (4) is switched to the small-picture signal path (20) can be bypassed.

10. Circuit arrangement according to one of Claims 1 to 9, characterized in that, for switching over between the tuning frequencies for the first and second programme, tuning voltages which are already stored in the control device (9) can be applied to the tuner (1).

11. Circuit arrangement according to one of Claims 1 to 10, characterized in that the small-picture memory device (6) is constructed as part of the large-picture memory device (8).

## Revendications

1. Montage pour l'incrustation d'une image dans une image dans un appareil de télévision comportant un seul syntoniseur (1), dont la fréquence de réglage d'accord peut être commutée, sous la commande d'un dispositif de commande (9), de telle sorte qu'un premier signal d'image (Y1, U1, V1) d'un premier programme peut être utilisé pour une représentation sous la forme d'une image de grande taille (A), et qu'un second signal d'image (Y2, U2, V2) d'un second programme est utilisable pour la représentation d'une petite image (B) pouvant être incrustée dans l'image de grande taille (A), et un dispositif de commutation (4), qui est branché en aval du synthoniseur (1) et peut être commandé par le dispositif de commande (9) et au moyen duquel alternativement le premier signal d'image (Y1, U1, V1), délivré par le syntoniseur (1) peut être envoyé à une voie (10) de transmission du signal d'image de grande taille, et le second signal d'image (Y2, U2, V2) peut être envoyé en un bref intervalle de temps à une voie (20) de transmission du signal de la petite image comportant un dispositif de mémoire de petites images (6), et comportant des moyens (11), grâce auxquels la petite image (B) mémorisée dans la voie (20) de transmission du signal de petite image peut être lue et peut être incrustée dans l'image de grande taille (A) dans un tube image (30) de l'appareil de télévision,
caractérisé par le fait
que le trajet (12) de transmission du signal de l'image de grande taille comporte un dispositif de mémoire d'images de grande taille (8), qui est prévu pour la mémorisation de l'image de grande taille (A) et à partir duquel l'image de grande taille mémorisée (A) peut être lue pour sa représentation,
que pendant les intervalles de temps, pendant lesquels le dispositif de commutation (4) est commuté sur le trajet (20) de transmission du signal de la petite image, l'image de grande taille (A) continue à être délivrée au moyen d'une lecture répétée de l'image de grande taille (A), précisément mémorisée en dernier lieu, à partir du dispositif de mémoire d'images de grande taille (8), et
que ces intervalles de temps sont choisis de telle sorte qu'on peut enregistrer en surinscription, sur la petite image (B) mémorisée dans le dispositif de mémorisation de petites images (6), au moins en partie, de nouveaux seconds signaux d'image (Y2, U2, V2), pour la représentation d'une nouvelle petite image (B).

2. Montage suivant la revendication 1, caractérisé par le fait que le dispositif de mémorisation d'images de grande taille (8) est réalisé au moins sous la forme d'une mémoire de demi-images.

3. Montage suivant la revendication 1 ou 2, caractérisé par le fait que le dispositif de mémorisation de petites images (6) est réalisé au moins sous la forme d'une mémoire de demi-images.

4. Montage suivant l'une des revendications 1 à 3, caractérisé par le fait que les signaux d'image (Y1, U1, V1; Y2, U2, V2), qui possèdent une composante de signal de luminance (Y1, Y2) ainsi que des composantes de signal de chrominance (U1, U2; V1, V2), peuvent être envoyés au dispositif de commutation (4).

5. Montage suivant l'une des revendications 1 à 3, caractérisé par le fait que les signaux d'image peuvent être envoyés en tant que signaux complexes de télévision au dispositif de commutation (4).

6. Montage suivant l'une des revendications 1 à 5, caractérisé par le fait que le dispositif de commutation (4) peut être commuté par le dispositif de commande (9) sur le trajet (20) de transmission du signal de la petite image, jusqu'à ce que le syntoniseur (1) puisse sauter brusquement à la fréquence de réglage d'accord pour le second programme, enregistrer une nouvelle demi-image dans le dispositif de mémoire de petites images (6) et que la fréquence de réglage d'accord du syntoniseur (3) puisse revenir brusquement au premier programme.

7. Montage suivant la revendication 6, caractérisé par le fait que le dispositif de commutation (4) commute les signaux d'image (Y2, U2, V2) pour le second programme, pour la représentation de petites images, au maximum en 100 ms sur la voie (20) de transmission du signal de petite image.

8. Montage suivant l'une des revendications 1 à 7, caractérisé par le fait que la petite image (B) est formée par des images fixes successives, qui peuvent être régénérées à une fréquence atteignant jusqu'à 20 Hz.

9. Montage suivant l'une des revendications 1 à 8, caractérisé par le fait que pour éviter des interruptions du son, il est prévu un dispositif numérique (12) de traitement du signal audio, au moyen duquel les intervalles de temps, pendant lesquels le dispositif de commutation (14) est commuté sur la voie (20) de transmission du signal de petite image, peuvent être sautés.

10. Montage suivant l'une des revendications 1 à 9, caractérisé par le fait que le syntoniseur (1) peut être chargé, pour la commutation entre les fréquences de réglage d'accord pour les premier et second programmes, par des tensions de réglage d'accord, qui sont déjà mémorisées dans le dispositif de commande (9).

11. Montage suivant l'une des revendications 1 à 10, caractérisé par le fait que le dispositif de mémorisation de petites images (6) est réalisé sous la forme d'une partie du dispositif de mémorisation d'images de grande taille (8).
